# EUROPEAN PATENT SPECIFICATION

(11) **EP 3 724 503 B1**
(45) Date of publication and mention of the grant of the patent: **04.05.2022**
(21) Application number: 18836395.6
(22) Date of filing: 10.12.2018
(51) Int. Cl.: F04B 41/06, F04B 23/04, F04B 39/12, F04B 37/02, F04B 37/14, H01J 41/20

(54) **PRESSURE GRADIENT PUMP**
DRUCKGRADIENTENPUMPE
POMPE À GRADIENT DE PRESSION

(30) Priority: 11.12.2017 US 201715837655
(43) Date of publication of application: 21.10.2020
(73) Proprietor: Edwards Vacuum, LLC, Sanborn, NY 14132 (US)
(72) Inventor: THIERLEY, Marcus Hans Robert, West Shakopee, Minnesota 55379 (US); LANGEBERG, Joel Craig, West Shakopee, Minnesota 55379 (US); DALGETTY, Michael Eric, Rolla, Missouri 65401 (US)
(74) Representative: Rawlins, Kate Cecilia
(86) International application number: PCT/IB2018/059826
(87) International publication number: WO 2019/116197

(56) References cited:
- EP-A1- 2 431 996
- CN-B- 104 089 120
- GB-A- 994 433
- JP-A- S58 143 238
- US-A- 3 379 365
- US-A1- 2010 230 955
- US-A1- 2016 239 025
- US-A1- 2017 133 210

## Description

### BACKGROUND

In particle accelerators, particles are accelerated along an evacuated path. Often times, one portion of the path is maintained at a higher pressure, such as 10⁻⁷ mbar than another portion of the path, which is maintained at a lower pressure such as an ultra-high vacuum in the range of 10⁻⁹ mbar to 10⁻¹⁰ mbar. To achieve this pressure differential, inline pressure gradient pumps have been developed that provide an unobstructed path for the accelerated particles while also providing a pressure drop across the pump. To do this, gradient pumps use throttles at the entrance and exit of the pump chamber. These throttles have small openings aligned with the particle path that limit the ability of gases to enter and exit the pump chamber. An ion pump element in the pump chamber captures some of the gases that pass through the entrance throttle thus reducing the pressure in the pump chamber. A well balanced ratio of pumping speed of the chosen pump elements and gas conductance through the throttle leads to a pressure deferential within the pump body between the pump entrance and exit flange.

If the maximum pumping speed of the chosen pumping elements is insufficient to acquire a desired pressure differential, multiple inline pumps can be connected together in series to achieve the desired pressure differential.

The discussion above is merely provided for general background information and is not intended to be used as an aid in determining the scope of the claimed subject matter. The claimed subject matter is not limited to implementations that solve any or all disadvantages noted in the background.

US 2017/0133210 A1 discloses an ultra-high vacuum forming device containing an ion pump having a compact size in the central axis direction.

JP S58-143238 A discloses a hydrogen detector for continuously measuring hydrogen concentration in an inert gas and molten metal.

GB 994 433 A discloses a method of removing corrosive or condensable gases or vapours from vacuum measuring devices and the like.

CN 104089120 B discloses a flange for a sealing structure for connection of openings of pressure-bearing equipment components.

US 2016/0239025 A1 discloses a valved manifold module arranged to be readily connected in a chain with similar modules to form a manifold assembly.

### SUMMARY

An apparatus includes a first pump module, a second pump module and a sealing disc. The first pump module includes a first flange having a first opening, a second flange having a second opening and at least one first pump. The second pump module includes a third flange having a third opening, a fourth flange having a fourth opening, and at least one second pump. The sealing disc is positioned between and in sealing contact with the second flange and the third flange and has a disc opening with a cross-sectional area that is less than a cross-sectional area of the second opening in the second flange and that is less than a cross-sectional area of the third opening in the third flange, where the disc opening is aligned with the first, second, third and fourth openings.

In a further embodiment, an apparatus includes a conduit with a first end having a first flange around a first opening, a second end having a second flange around a second opening, and a body between the first end and the second end having a third opening in molecular flow communication with the first opening and the second opening. The first opening has a first cross-sectional area and the second opening has a second cross-sectional area. An ion pump is in molecular flow communication with the third opening. A first sealing disc has a first surface providing sealing contact with the first flange, a second surface facing opposite the first surface, and an opening extending between the first surface and the second surface and having a cross-sectional area that is less than the first cross-sectional area. A second sealing disc has a first surface providing sealing contact with the second flange, a second surface facing opposite the first surface of the second sealing disc, and an opening extending between the first surface of the second sealing disc and the second surface of the second sealing disc and having a cross-sectional area that is less than the second cross-sectional area.

In a still further embodiment, an apparatus includes a first housing containing a first pumping unit and a second housing containing a second pumping unit. A first flange extends from the first housing and a second flange extends from the second housing and is secured to the first flange. A first conductor port and a second conductor port extend from the first housing and a third conductor port and a fourth conductor port extend from the second housing. A conductor extends from the second conductor port to the third conductor port.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is a partially exploded left perspective view of a single stage pressure gradient pump in accordance with one embodiment.
FIG. 2 is a right perspective view of the pump of FIG. 1.
FIG. 3 is a top view of the pump of FIG. 1.
FIG. 4 is a partial sectional front view of the pump of FIG. 1.
FIG. 5 is a partial sectional right side view of the pump of FIG. 1.
FIG. 6 is a front view of a conduit in the pump of FIG. 1.
FIG. 7 is a perspective view of the conduit of FIG. 6.
FIG. 8 is a perspective view of a sealed chamber in the pump of FIG. 1.
FIG. 9 is a left sectional view of the sealed chamber of FIG. 8.
FIG. 10 is a perspective sectional view of the sealed chamber of FIG. 8.
FIG. 11 is a sectional view showing a first sealing disc between the pump of FIG. 1 and a conduit.
FIG. 12 is a sectional view showing a second sealing disc between the pump of FIG. 1 and the conduit.
FIG. 13 is a partially exploded perspective view of a two-stage pressure gradient pump in accordance with one embodiment.
FIG. 14 is a front-bottom perspective view of the two-stage pump of FIG. 13.
FIG. 15 is a front view of the pump of FIG. 13.
FIG. 16 is a front sectional view of the pump of FIG. 13.
FIG. 17 is a left side view of the pump of FIG. 13.
FIG. 18 is a right side view of the pump of FIG. 13.
FIG. 19 is a top view of the pump of FIG. 13.
FIG. 20 is a bottom view of the pump of FIG. 13.
FIG. 21 is perspective view of a two stage pressure gradient pump connected to a controller.

### DETAILED DESCRIPTION OF ILLUSTRATIVE EMBODIMENTS

In the past, the pressure gradient provided by an inline gradient pump has been difficult to adjust after installation. In one particular gradient pump of the prior art, the throttle, which has been used to define the achievable differential pressure, has been screwed into or otherwise fixed to an internal flange within the pump. As a result, in order to replace the throttle with a different-sized throttle, the entire pump must first be removed from the particle accelerator, then the pump must be disassembled to reach the interior of one of the flanges, then the screws or other fasteners holding the throttle to the flange must be removed and finally the throttle must be replaced with a new throttle before the disassembly process is reversed to reassemble the pump and attach it to the accelerator. In addition, a separate sealing disc must be replaced when the throttle is replaced adding additional costs to adjusting the differential pressure provided by the gradient pump.

In embodiments described below, a gradient pump is provided that utilizes a sealing disc designed to seal an exterior flange of the pump to another flange in the accelerator assembly and to define the differential pressure provided by the gradient pump. In particular, the sealing disc is provided with a narrower aperture than the inner diameter of the conduit containing the flange so as to throttle the gases that can enter and/or exit the gradient pump. The size of the aperture thereby controls the size of the differential pressure that the gradient pump can achieve. By utilizing the sealing disc as the throttle, gradient pumps of the various embodiments provide an easier and more cost effective way to alter the differential pressure provided by the pump since only the sealing disc needs to be replaced and the pump does not need to be disassembled in any way. Instead, the differential pump simply needs to be removed from the accelerator assembly so that the sealing disc can be replaced with a different sealing disc then the pump is reattached to the accelerator assembly.

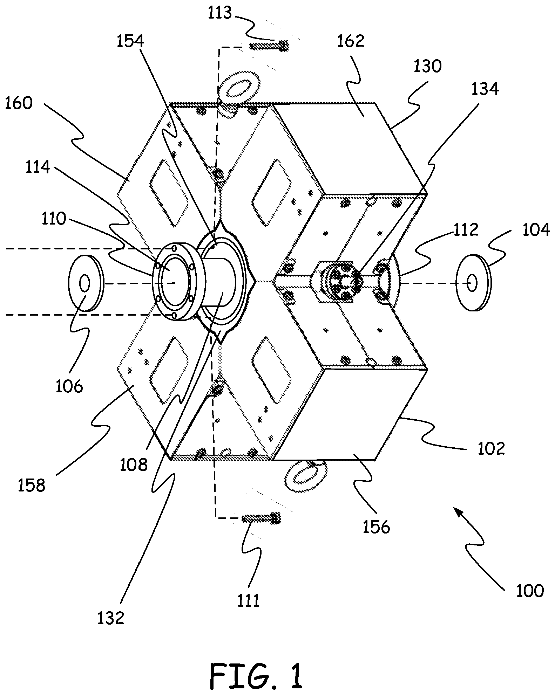

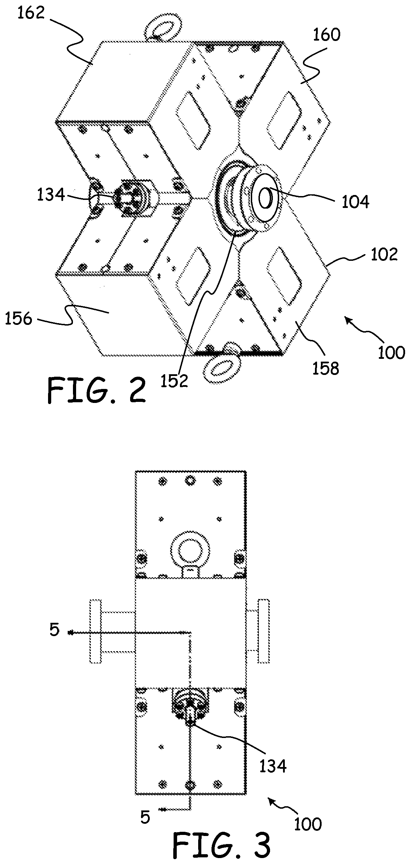

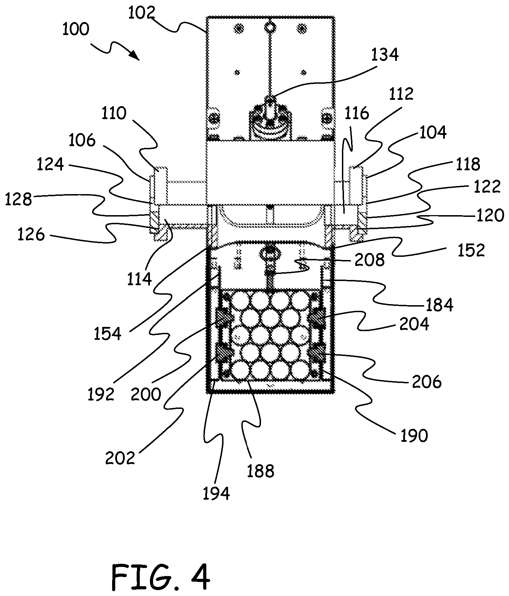

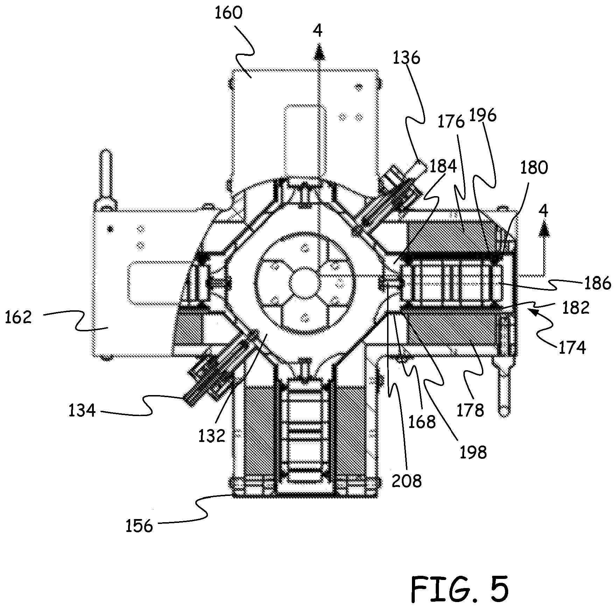

FIGS. 1-5 provided an exploded left perspective view, a right perspective view, a top view, a partial sectional front view and a partial sectional right side view, respectively, of a pressure gradient pump 100. Pressure gradient pump 100 includes a pump module 102 and sealing discs 104 and 106. Pump module 102 includes a conduit 108 that is machined from a single piece of stock material to form two flanges 110 and 112 on which sealing discs 106 and 104 are seated. As shown in FIG. 4, flange 110 surrounds an opening 114 in conduit 108 and flange 112 surrounds an opening 116 in conduit 108. Sealing disc 104 has an opening 118 from a first side 120 of sealing disc 104 that seals against flange 112 to a second side 122 of sealing disc 104 that faces away from flange 112 and seals against an opposing flange (not shown). Sealing disc 106 has an opening 124 that extends from a first side 126 of sealing disc 106 that seals against flange 110 to a second side 128 that faces away from flange 110 and seals against an opposing flange (not shown). In accordance with most embodiments, disc opening 118 has a smaller cross-sectional area than opening 116 in conduit 108 and disc opening 124 has a smaller cross-sectional area than opening 114 in conduit 108. As described further below, flanges 110 and 112 are fastened to corresponding flanges on conduits of other pump modules and/or conduits of other assemblies in a particle accelerator system using one or more fasteners, such as bolts 111 and 113 of FIG. 1. When flanges 110 and 112 are fastened to other flanges, sealing discs 104 and 106 act to both seal the connection between flanges 110,112 and the respective flanges they are connected to and to throttle gases such that a pressure gradient is developed across pressure gradient pump 100. In particular, the smaller cross-sectional areas of the openings in sealing discs 104 and 106 relative to the openings at the flanges reduce the probability of gas flowing through the sealing discs. This allows a pressure differential to develop across each of sealing discs 104 and 106 resulting in a pressure gradient across pump 100. For example, the pressure gradient can result in a higher pressure on second side 122 of sealing disc 104 than second side 128 of sealing disc 106.

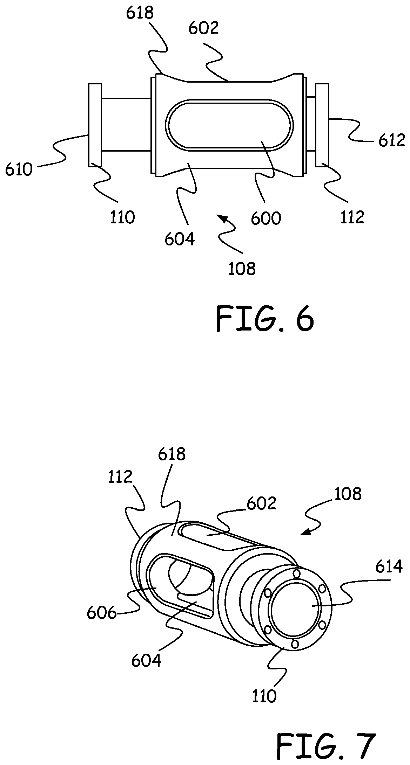

FIGS. 6 and 7 provide a front and perspective view of conduit 108 in isolation. Conduit 108 includes a first end 610 where flange 110 is positioned around opening 114 and a second end 612 where flange 112 is positioned around opening 116. A body 618 is positioned between first end 610 and second end 612 and includes four openings 600, 602, 604 and 606. Openings 600, 602, 604, and 606 are in molecular flow communication with flange openings 114 and 116 and provide molecular flow communication from the interior of conduit 108 to respective pumping units described further below. Thus, gases are able to move through molecular flow between the various elements that are in molecular flow communication with each other. Because of openings 600, 602, 604 and 606, non-accelerated gases within conduit 108 are allowed to drift out of conduit 108 and into the pumping units.

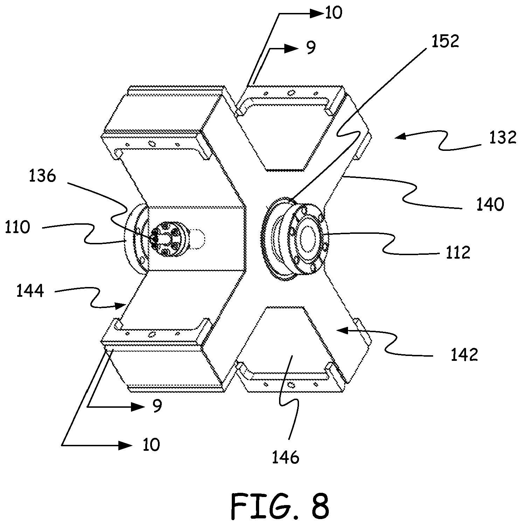

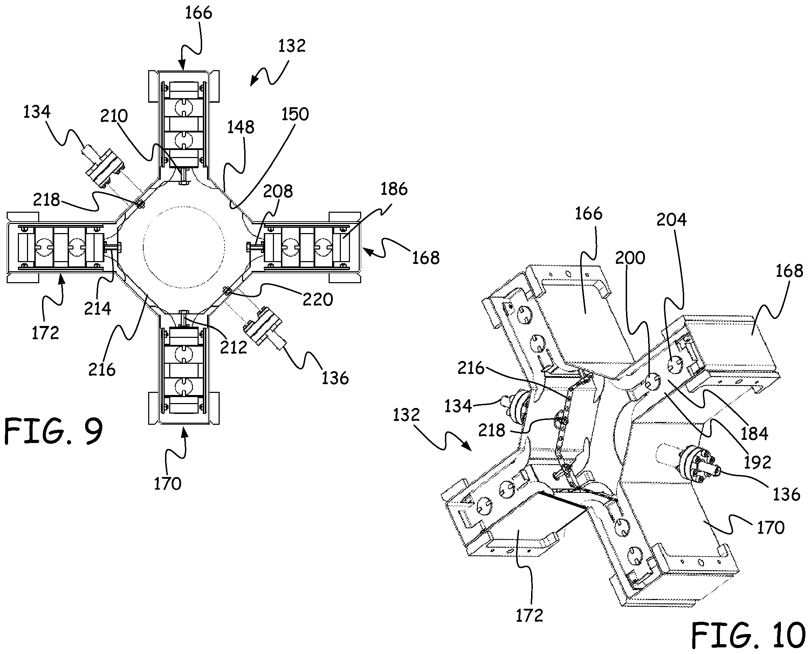

Pump module 102 also includes an external housing 130 that surrounds a sealed chamber 132. FIGS. 8, 9 and 10 show a perspective view, a left sectional view and a perspective sectional view, respectively, of sealed chamber 132 (also referred to as a pump body, sealed housing or housing 132). Sealed chamber 132 includes electrical or conductor ports 134 and 136 and a shell or housing 140 that includes a first side 142, a second side 144 and a lateral member 146 that extends between first side 142 and second side 144. Together, first side 142, second side 144, and lateral member 146 define an exterior 148 and a sealed interior 150 (FIG. 9) of shell or housing 140. First side 142 of shell or housing 140 is welded to body 618 at cylindrical weld 152 and second side 144 of shell or housing 140 is welded to body 618 at cylindrical weld 154 (FIG. 1). Lateral member 146 is welded to electrical ports 134 and 136. The only passages from exterior 148 to interior 150 of sealed chamber 132 are openings 114 and 116 in the centers of flanges 110 and 112 of conduit 108 and the openings in electrical ports 134 and 136.

External housing 130 includes four pump pockets 156, 158, 160 and 162. In accordance with one embodiment, each pump pocket contains a separate pumping unit. In the embodiment shown in the Figures, each pumping unit is an ion pumping unit consisting of two magnets on opposite sides of a respective sealed pump pocket formed by sealed chamber 132. In particular, pump pockets 156, 158, 160 and 162 contain sealed pump pockets 166, 168, 170 and 172, respectively. Each sealed pump pocket contains two cathode plates mounted in parallel to each other on a cathode cage and an array of cylindrical anodes mounted in an anode cage between the two cathode plates such that the open ends of the cylindrical anodes face the cathode plates. The axes of the cylindrical anodes are aligned with the magnetic field extending between the magnets positioned on the outside of the sealed pump pocket. Four electrical insulators provide structural support between the anode cage and the cathode cage while electrically isolating the cathode plates from the cylindrical anodes.

For example, pump pocket 158 contains an ion pumping unit 174 (FIGS. 4, 5, 9 and 10) that consists of two magnets 176 and 178 external to sealed pump pocket 168, which contains two cathode plates 180 and 182 mounted to a cathode mounting cage 184 and an array of cylindrical anodes 186 mounted in an anode cage 188. Cathode mounting cage 184 includes sides 190 and 192 that include tabs, such as tab 194, that are in contact with sides 142 and 144, respectively, of shell 140 and that are tack welded to lateral member 146 of shell 140. Cathode mounting cage 184 also includes lateral members 196 and 198, which extend between and are electrically connected to sides 190 and 192. Cathode plates 180 and 182 are mounted to and electrically connected to lateral members 196 and 198. Anode mounting cage 188 surrounds the cylinder walls of the array of cylindrical anodes 186 and is isolated from sides 190 and 192 of cathode mounting cage 184 by insulators 200, 202, 204, and 206. A post 208 extends from anode mounting cage 188 toward conduit 108. Anode mounting cage 188 and post 208 are electrical conductors capable of conveying a voltage to each of the cylinders in array of cylindrical anodes 186. Cathode mounting cage 184 is an electrical conductor capable of maintaining cathode plates 180 and 182 at the same voltage as shell 140. Insulators 200, 202, 204 and 206 permit anode mounting cage 188 to be at a different voltage than cathode mounting cage 184. Each cylindrical anode in an ion pumping unit has a central axis that is perpendicular to the cathode plates of the anode pump and has a length measured along the central axis.

Each of the sealed pump pockets 166, 170 and 172 contain similar elements as sealed pump pocket 168. Thus, each sealed pump pocket has a cathode mounting cage that is connected to two cathode plates and that is connected to shell or housing 140. In addition, each sealed pump pocket has an anode mounting cage that surrounds an array of cylindrical anodes and that is connected to a respective post. In particular, sealed pump pockets 166, 170, and 172 include posts 210, 212, and 214, respectively.

A strap 216 is connected between posts 208, 210, 212, and 214, providing an electrical connection between all of the posts and between all of the cylindrical anodes. (FIG. 9) Strap 216 is also connected to posts 218 and 220, which in turn are connected to respective electrical ports 134 and 136. Since electrical ports 134 and 136 are electrically connected by strap 216, the voltage provided along either electrical port is passed to the other port and to each of the cylindrical anodes in the four respective pumping units.

In operation, a positive voltage is applied to strap 216 through one of electrical ports 134 and 136 while shell 140 is maintained at ground. In accordance with one embodiment, strap 216 is at approximately 7 kV, for example. This causes each cylindrical anode in each of the four ion pumping units to be at a positive voltage relative to the cathode plates of the ion pumping units. Gases within the system to be evacuated eventually move from the interior of conduit 108 to a position within the interior of one of the cylindrical anodes in one of the ion pumping units. The combination of the magnetic field between the two magnets of the ion pumping unit, such as magnets 176 and 178, and the electrical potential between the cylindrical anodes and the cathode plates cause electrons to be trapped within each of the cylindrical anodes. Although trapped within the cylindrical anodes, the electrons are in motion such that as gases enter a cylindrical anode, they are struck by the trapped electrons causing the gases to ionize. The resulting positively charged ions are accelerated by the potential difference between cylindrical anode and the cathode plates causing the positively charged ions to move from the interior of the cylindrical anode toward one of the cathode plates. The positively charged ions strike the cathode plates causing material from the cathode plate to sputter outwardly away from cathode plate and to cause the ion to become embedded in the cathode plate or neutralized by the impact with the cathode plate .

Although the embodiment above shows strap 216 connected to the cylindrical anodes, in other embodiments, strap 216 is connected to the cathode plates and the cylindrical anodes are connected to a ground potential. A negative potential is then applied to electrical ports 134 and 136 to create the potential difference between the anodes and the cathodes in the pumps.

To facilitate movement of gases to the cylindrical anodes, the centers of each of the four openings 600, 602, 604, and 606 in conduit 108 are centered on the midpoints of the lengths of the cylindrical anodes of a respective ion pump. This creates an open linear path from each opening 600, 602, 604 and 606 to the spaces between the cathode plates and the cylindrical anodes thereby facilitating removal of gases from the interior of conduit 108 by providing multiple direct paths from the interior of conduit 108 to the pumping units.

Although the embodiments above describe ion pumping units in each of the pump pockets, in other embodiments Non-Evaporable Getter (NEG) pumps are used in place of the ion pumps. In accordance with some embodiments, each NEG pump includes a heater for conditioning, activating, and/or reactivating the Getter material with each heater being controllable through electrical ports 134 and 136.

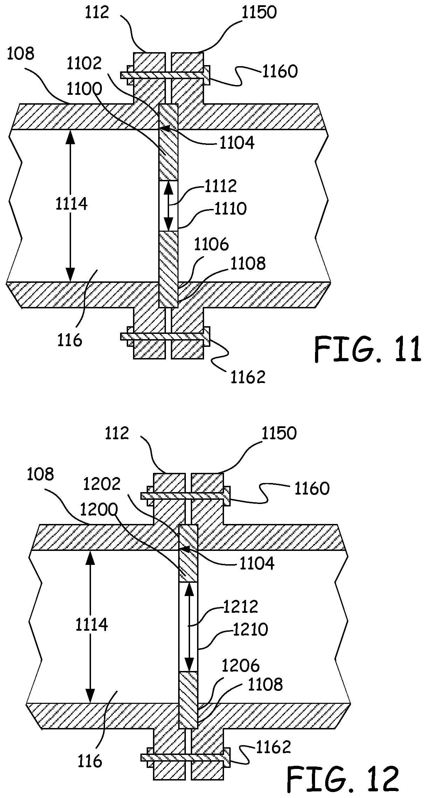

As discussed above, various embodiments permit the pressure differential achieved by the single stage pump of FIGS. 1-10 to be easily modified by simply replacing sealing disc 106 with another sealing disc that has a different-sized aperture. FIGS. 11 and 12 show the replacement of one sealing disc with another sealing disc to achieve a different pressure differential across the pump of FIGS 1-10.

FIGS. 11 and 12 show an enlarged sectional front view of flange 112 of pump 100 bolted to a corresponding flange 1150, which can either be a flange for part of the accelerator or can be flange 110 of a second gradient pump. In FIG. 11, a sealing disc 1100 is shown positioned between flange 112 and flange 1150. Sealing disc 1100 provides a cylindrical seal 1102 against a face 1104 of flange 112. Sealing disc 1100 also provides a cylindrical 1106 against facing surface 1108 of flange 1150. In addition, sealing disc 1100 has an opening 1110 having a diameter 1112 that is smaller than diameter 1114 of opening 116 of conduit 108 at flange 112. As a result, the cross-sectional area of opening 1110 is smaller than the cross-sectional area of opening 116 of conduit 108 thereby allowing sealing disc 1100 to act as a throttle for pump 100 while at the same time acting to seal flange 112 of pump 100.

In FIG. 12, sealing disc 1100 has been replaced by sealing disc 1200 by removing the bolts, such as bolts 1160 and 1162, that connect flange 112 to flange 1150, removing sealing disc 1100 from between flanges 112 and 1150, inserting sealing disc 1200 between flanges 112 and 1150 so that sealing disc 1200 is seated in the respective recesses defined in flanges 112 and 1150, and reinserting the bolts 1160 and 1162 to reconnect flange 112 to flange 1150.

Once in place, sealing disc 1200 provides a cylindrical seal 1202 against facing surface 1104 of flange 112. Sealing disc 1200 also provides a cylindrical seal 1206 against facing surface 1108 of flange 1150. Sealing disc 1200 includes an opening 1210 having a diameter 1212 that is smaller than diameter 1114 of opening 116 at flange 112. As a result, the cross-sectional area of opening 1210 is smaller than the cross-sectional area of opening 116 thereby allowing sealing disc 1200 to act as a throttle for pump 100. Comparing sealing discs 1100 to 1200, it can be seen that diameter 1212 of opening 1210 in sealing disc 1200 is larger than diameter 1112 of opening 1110 in sealing disc 1100. As a result, replacing disc 1100 with disc 1200 results in a lower pressure gradient across the pump since more gases are allowed to cross into opening 116 when sealing disc 1200 is present than when sealing disc 1100 is present. This change in the achievable pressure gradient was easily made by removing the bolts holding flanges 1150 and 112 together, removing sealing disc 1100, inserting sealing disc 1200 in its place, and reattaching flange 1150 to flange 112.

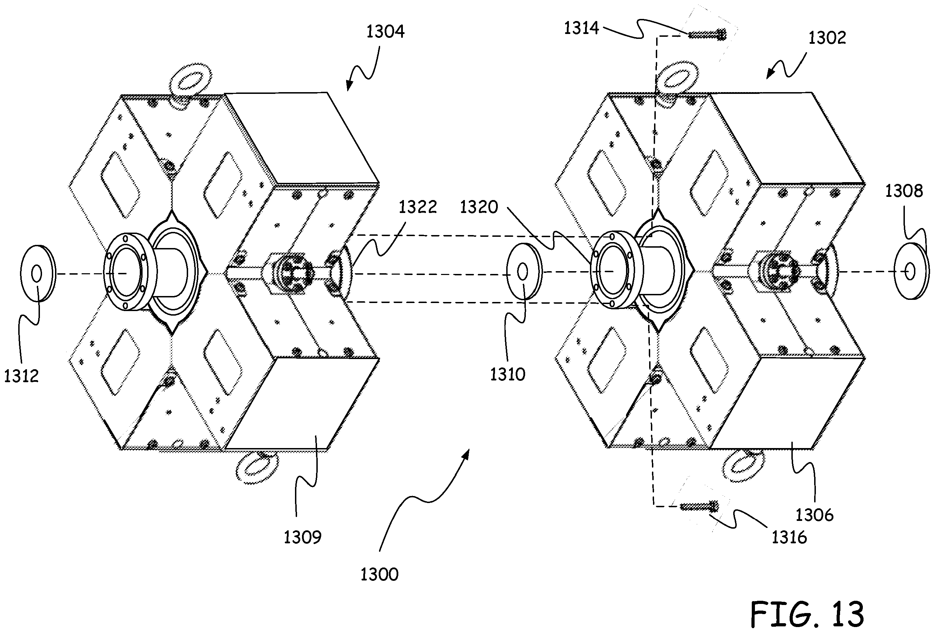

To achieve a higher pressure gradient, multiple single stage pumps 100 can be connected in series. FIG. 13 provides an exploded perspective view of a multistage gradient pump 1300 consisting of a pressure gradient pump 1302 and a pressure gradient pump 1304 connected in series, where gradient pumps 1302 and 1304 are identical to pump 100 discussed above with the exception that the two pumps share a common sealing disc 1310. Thus, pressure gradient pump 1302 consists of a pump module 1306 and sealing discs 1308 and 1310 while gradient pump 1304 consists of pump module 1309 and sealing discs 1310 and 1312.

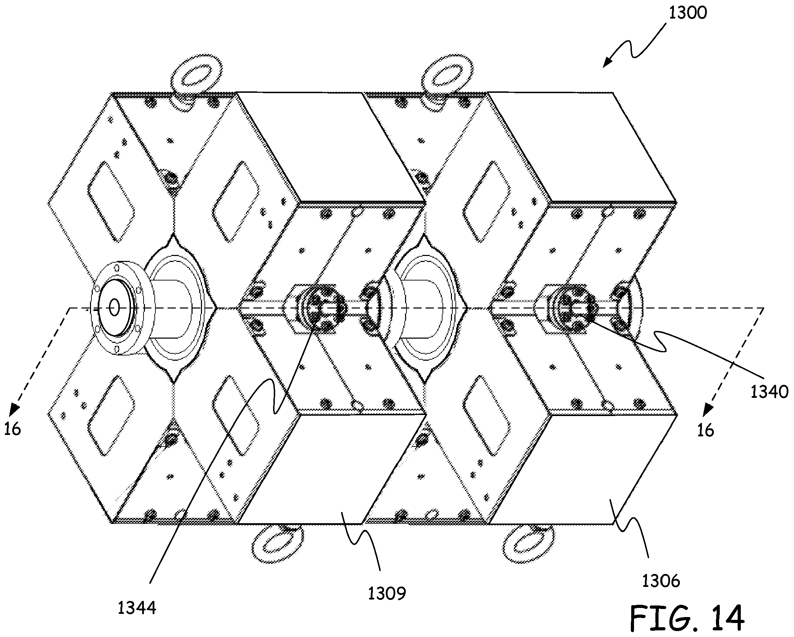

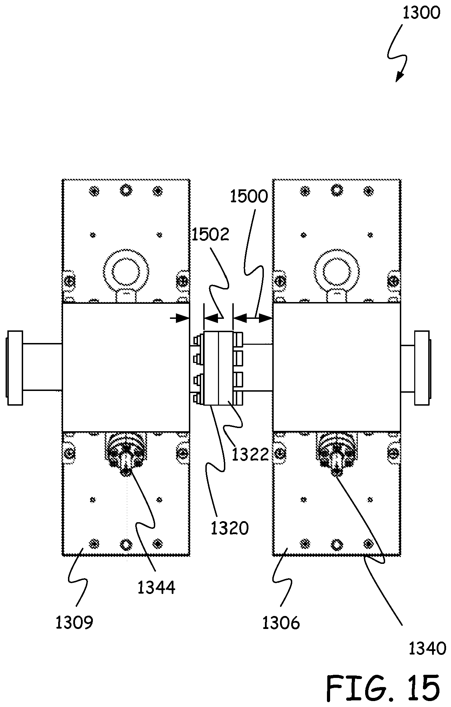

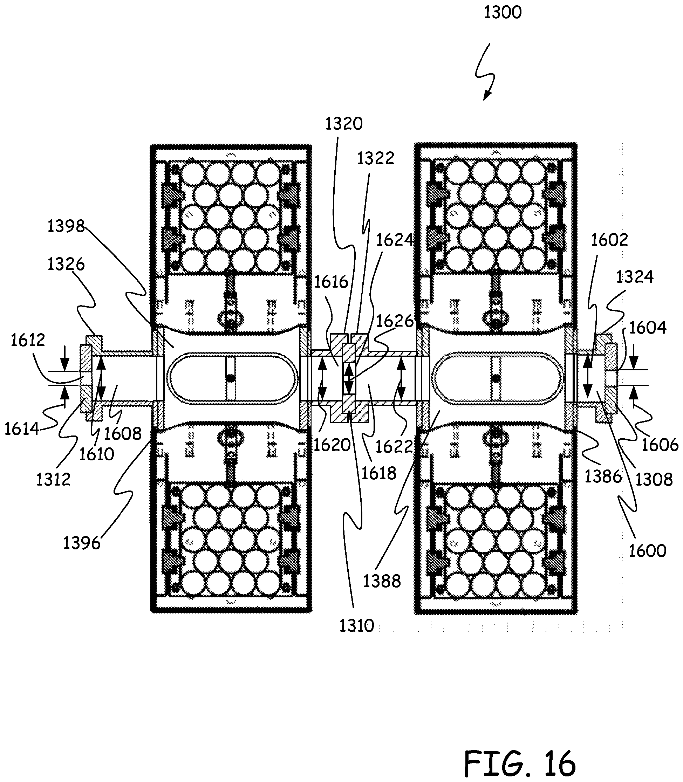

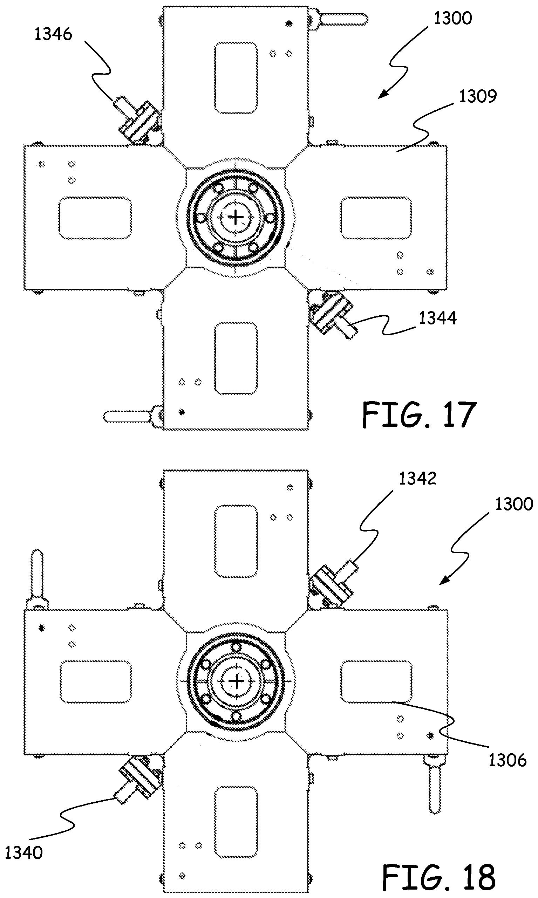

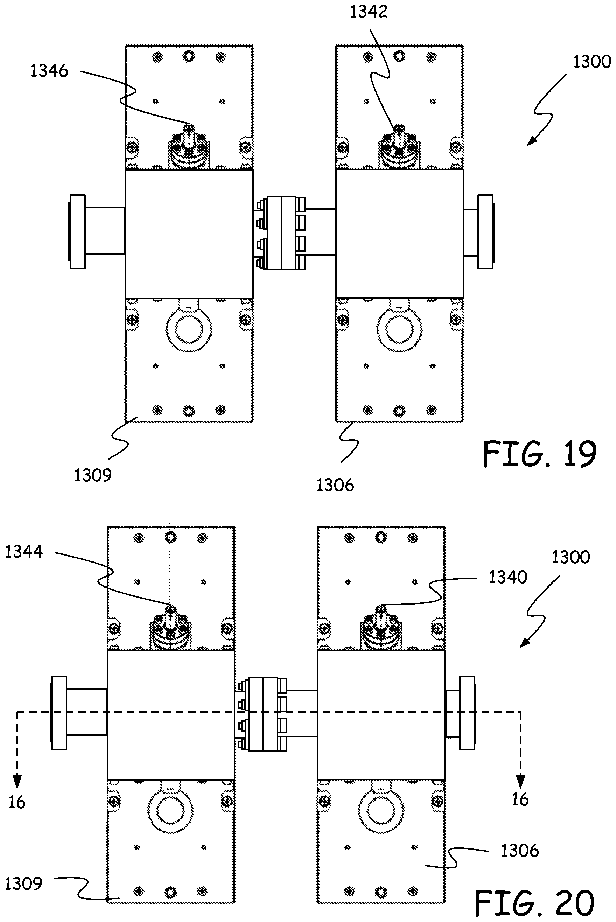

FIG. 14 shows a perspective view of multistage gradient pump 1300. FIG. 15 shows a front view and FIG. 16 shows a front sectional view of multistage gradient pump 1300. FIGS. 17 and 18 show a left side view and a right side view, respectively, of multistage gradient pump 1300. FIGS. 19 and 20 show a top view and a bottom view, respectively of multistage gradient pump 1300.

Pump modules 1306 and 1309 are identical to pump module 102 of FIGS. 1-10 described above. For the purposes of clarity, the elements of pump modules 1306 and 1309 are described with different reference numbers so as to distinguish pump module 1306 from pump module 1309. Pump module 1306 includes a conduit 1388 having two flanges 1322 and 1324 and pump module 1309 includes a conduit 1398 having flanges 1320 and 1326 (FIG. 16). Conduits 1388 and 1398 are identical to conduit 108 of pump 100. Conduit 1388 is welded to a sealed chamber 1386 and conduit 1398 is welded to a sealed chamber 1396. Sealed chambers 1386 and 1396 are identical to sealed chamber 132 of pump 100.

Pump modules 1306 and 1309 are connected together by a plurality of fasteners, such as bolts 1314 and 1316 between flange 1320 of pump module 1306 and flange 1322 of pump module 1309 and external of sealing disc 1310. Bolts 1314 and 1316 are releasable such that when the bolts are released, sealing disc 1310 is free to be removed from between flanges 1320 and 1322. In accordance with one embodiment, conduits 1388 and 1398 are asymmetrical such that a distance 1500 from the sealed chamber 1386 to flange 1322 is longer than distance 1502 from sealed chamber 1396 to flange 1320. (FIG. 15) This asymmetry allows more space for the insertion of bolts 1314 and 1316 into the mounting holes of flanges 1322 and 1320 between flange 1322 and sealed chamber 1386 while minimizing the overall length of each of pumps 1302 and 1304.

As shown in FIG. 16, sealing disc 1308 is seated in and seals against flange 1324, which has an opening 1600 with a diameter 1602. Sealing disc 1308 has an opening 1604 with a diameter 1606 that is smaller than diameter 1602 in opening 1600 of flange 1324. As such, opening 1604 in sealing disc 1308 has a smaller cross-sectional area than opening 1604 in flange 1324 thereby allowing sealing disc 1308 to act as a throttle. Sealing disc 1312 is seated in and seals against flange 1326, which has an opening 1608 with a diameter 1610. Sealing disc 1312 has an opening 1612 with a diameter 1614 that is smaller than diameter 1610 in opening 1608 of flange 1326 thereby allowing sealing disc 1312 to act as a throttle. As such, opening 1612 in sealing disc 1312 has a smaller cross-sectional area than opening 1608 in flange 1326. Sealing disc 1310 is seated in and seals against flanges 1320 and 1322, which have respective openings 1616 and 1618 with respective diameters 1620 and 1622. Sealing disc 1310 has an opening 1624 with a diameter 1626 that is smaller than diameters 1620 and 1622 in openings 1616 and 1618 of flanges 1320 and 1322. As such, opening 1624 in sealing disc 1310 has a smaller cross-sectional area than openings 1616 and 1618 in flanges 1320 and 1322. This means that sealing disc 1310 acts as a throttle between pumps 1302 and 1304 allowing the interiors of pumps 1302 and 1304 to be at different pressures.

As a result, a first pressure drop occurs across pump 1302 and a second pressure drop occurs across pump 1304. The pressure drops provided across pump 1302 and pump 1304 can be easily adjusted by replacing any one or any combination of sealing discs 1308, 1310 and 1312 with sealing discs with different-sized apertures. In particular, the sealing discs can be replaced by removing the bolts in the flange holding the existing sealing disc, removing the sealing disc from the flange, inserting the new sealing disc into the flange, and re-bolting the flange to its neighboring flange. In addition, since the respective conduits 108 of pumps 1302 and 1304 are aligned, a linear path is provided through multistage gradient pump 1300 to allow particles to be accelerated through pump 1300 from a source on one side of pump 1300 to a target area on the other side of pump 1300.

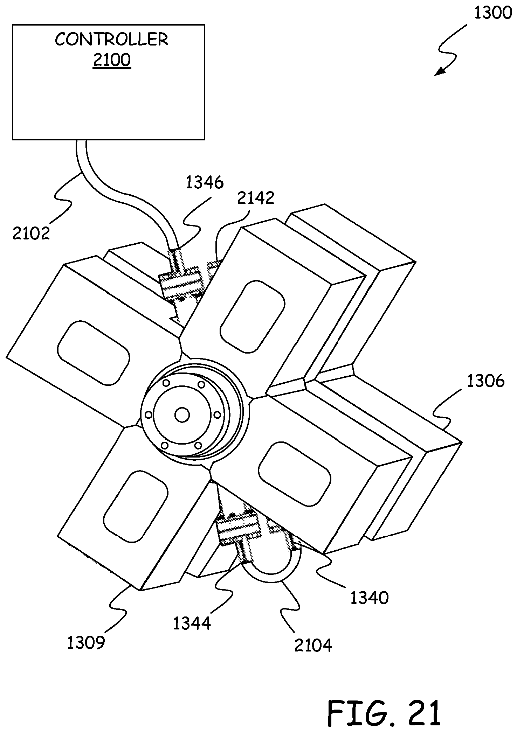

FIG. 21 shows a perspective view of multistage gradient pump 1300 connected to a controller 2100, which provides electrical power to the anodes of the ion pumps in pump modules 1306 and 1309. As shown in FIGS. 13-20, pump module 1306 includes electrical ports 1340 and 1342 and pump module 1309 includes electrical ports 1344 and 1346. In FIG. 21, controller 2100 is electrically connected to electrical port 1346 by a conductor 2102. This provides electrical power to the ion pumps in pump module 1309. Because internal strap 194 electrically connects electrical port 1346 to electrical port 1344, the power provided by controller 2100 to port 1346 also appears at electrical port 1344. An external conductor 2104 connects electrical port 1344 of pump module 1309 to electrical port 1340 of pump module 1306. Thus, conductor 2104 provides the power provided by controller 2100 to pump module 1306. In FIG. 21, electrical port 1342 of pump module 1306 has been replaced with a cap 2142. By providing two electrical ports on a pump module, the embodiment of FIG. 21 allows a single controller 2100 to provide power to multiple pump modules in a multistage gradient pump through a single conductor 2102 between the controller 2100 and the multistage gradient pump 1300.

Although the openings in the flanges and the sealing discs are described above as being cylindrical, in other embodiments other opening shapes are used including rectangular openings, for example. In addition, although only a two-stage multistage gradient pump has been discussed above, additional stages may be added to form larger multistage gradient pumps with larger pressure gradients.

Although elements have been shown or described as separate embodiments above, portions of each embodiment may be combined with all or part of other embodiments described above.

Although the present invention has been described with reference to preferred embodiments, workers skilled in the art will recognize that changes may be made in form and detail without departing from the scope of the invention as defined by the appended claims.

## Claims

1. An apparatus for providing a pressure gradient between a first opening and a second opening, said apparatus comprising:
a conduit (108, 1388) comprising a first end (610) having a first flange (110, 1322) around a first opening (114), a second end (612) having a second flange (112, 1324) around a second opening (116), and a body (618) between the first end (610) and the second end (612) having a third opening (600, 602, 604, 606) in molecular flow communication with the first opening (114) and the second opening (116), where the first opening (114) has a first cross-sectional area and the second opening (116) has a second cross-sectional area;
a pumping unit in molecular flow communication with the third opening (600, 602, 604, 606); and **characterized in that** the apparatus comprises
a first throttle for controlling the pressure gradient, said first throttle consisting of
a first sealing disc (106) having:
a first surface (126) providing sealing contact with the first flange (110);
a second surface (128) facing opposite the first surface (126); and
an opening (124) extending between the first surface (126) and the second surface (128) and having a cross-sectional area that is less than the first cross-sectional area; wherein
the disc opening (124) is aligned with the first and second opening.

2. An apparatus according to claim 1, said apparatus further comprising:
a second throttle consisting of a second sealing disc (104) having:
a first surface (120) providing sealing contact with the second flange (112);
a second surface (122) facing opposite the first surface (120) of the second sealing disc (104); and
an opening (118) extending between the first surface (120) of the second sealing disc (104) and the second surface (122) of the second sealing disc (104) and having a cross-sectional area that is less than the second cross-sectional area.

3. The apparatus of claim 1 or 2, further comprising a second conduit (1398) comprising a third flange (1320) in sealing contact with the second surface of the first sealing disc (106).

4. The apparatus of claim 3 wherein the second conduit (1398) further comprises a first end where the third flange (1320) is around a first opening (1616) in the second conduit (1398), a second end having a fourth flange (1326) around a second opening (1608) in the second conduit, and a body between the first end and the second end of the second conduit and having a third opening in molecular flow communication with the first opening and the second opening of the second conduit.

5. The apparatus of claim 4 further comprising a second pumping unit in molecular flow communication with the third opening in the second conduit (1398).

6. The apparatus of claim 5 further comprising:
first and second electrical ports (1340, 1342) connected to the pumping unit;
third and fourth electrical ports (1344, 1346) connected to the second pumping unit; and
an external conductor (2104) connected between the second electrical port and the third electrical port.

7. The apparatus of claim 6 wherein the body of the conduit further comprises fourth, fifth and sixth openings (600, 602, 604, 606) each in molecular flow communication with the first opening (114) and second opening (116) of the conduit (108) and wherein the apparatus further comprises a third pumping unit in molecular flow communication with the fourth opening, a fourth pumping unit in molecular flow communication with the fifth opening, and a fifth pumping unit in molecular flow communication with the sixth opening and wherein the third, fourth and fifth pumping units are all connected to the first and second electrical ports (1340, 1342).

8. The apparatus of any one of claims 3 to 7, wherein the first flange (110, 1322) and the third flange (1320) are connected together by fasteners (1314, 1316) exterior to the sealing disc.

9. The apparatus of claim 8 wherein the fasteners (1314, 1316) are releasable such that when the fasteners are released, the sealing disc is free to be removed from between the second flange and the third flange.

10. The apparatus of any preceding claim, wherein there is a linear path from the pumping unit to the third opening.

## Patentansprüche

1. Einrichtung zum Erzeugen eines Druckgradienten zwischen einer ersten Öffnung und einer zweiten Öffnung, wobei die Einrichtung aufweist:
eine Leitung (108, 1388) mit einem ersten Ende (610) mit einem ersten Flansch (110, 1322) um eine erste Öffnung (114), einem zweiten Ende (612) mit einem zweiten Flansch (112, 1324) um eine zweite Öffnung (116), und einem Körper (618) zwischen dem ersten Ende (610) und dem zweiten Ende (612) mit einer dritten Öffnung (600, 602, 604, 606) in Molekularströmungsverbindung mit der ersten Öffnung (114) und der zweiten Öffnung (116), wobei die erste Öffnung (114) eine erste Querschnittsfläche und die zweite Öffnung (116) eine zweite Querschnittsfläche hat;
einer Pumpeinheit in Molekularströmungsverbindung mit der dritten Öffnung (600,602, 604, 606); und **dadurch gekennzeichnet, dass** die Einrichtung aufweist:
eine erste Drossel zur Steuerung des Druckgradienten, wobei die erste Drossel besteht aus
einer ersten Dichtungsscheibe (106) mit:
einer ersten Oberfläche (126), die eine abdichtende Berührung mit dem ersten Flansch (110) herstellt;
einer zweiten Oberfläche (128), die entgegen der ersten Oberfläche (126) weist; und
einer Öffnung (124), die zwischen der ersten Oberfläche (126) und der zweiten Oberfläche (128) verläuft und eine Querschnittsfläche hat, die kleiner als die erste Querschnittsfläche ist; wobei
die Scheibenöffnung (124) mit der ersten und der zweiten Öffnung fluchtet.

2. Einrichtung nach Anspruch 1, wobei die Einrichtung weiter aufweist:
eine zweite Drossel, die aus einer zweiten Dichtungsscheibe (104) besteht, die aufweist:
eine erste Oberfläche (120), die eine abdichtende Berührung mit dem zweiten Flansch (112) herstellt;
einer zweiten Oberfläche (122), die entgegen der ersten Oberfläche (120) der zweiten Dichtungsscheibe (104) weist; und
einer Öffnung (118), die zwischen der ersten Oberfläche (120) der zweiten Dichtungsscheibe (104) und der zweiten Oberfläche (122) der zweiten Dichtungsscheibe (104) verläuft und eine Querschnittsfläche hat, die kleiner als die zweite Querschnittsfläche ist.

3. Einrichtung nach Anspruch 1 oder 2, die weiter eine zweite Leitung (1398) mit einem dritten Flansch (1320) in abdichtender Berührung mit der zweiten Oberfläche der ersten Dichtungsscheibe (106) aufweist.

4. Einrichtung nach Anspruch 3, wobei die zweite Leitung (1398) weiter ein erstes Ende aufweist, wo der dritte Flansch (1320) um eine erste Öffnung (1616) in der zweiten Leitung (1398) verläuft, weiter ein zweites Ende mit einem vierten Flansch (1326) um eine zweite Öffnung (1608) in der zweiten Leitung aufweist, und einen Körper zwischen dem ersten Ende und dem zweiten Ende der zweiten Leitung und mit einer dritten Öffnung in Molekularströmungsverbindung mit der ersten Öffnung und der zweiten Öffnung der zweiten Leitung aufweist.

5. Einrichtung nach Anspruch 4, die weiter eine zweite Pumpeinheit in Molekularströmungsverbindung mit der dritten Öffnung in der zweiten Leitung (1398) aufweist.

6. Einrichtung nach Anspruch 5, die weiter aufweist:
erste und zweite elektrische Anschlüsse (1340, 1342), die mit der Pumpeinheit verbunden sind;
dritte und vierte elektrische Anschlüsse (1344, 1346), die mit der zweiten Pumpeinheit verbunden sind; und
einem externen Leiter (2104), der zwischen dem zweiten elektrischen Anschluss und dem dritten elektrischen Anschluss verbunden ist.

7. Einrichtung nach Anspruch 6, wobei der Körper der Leitung weiter eine vierte, eine fünfte und eine sechste Öffnung (600, 602, 604, 606) aufweist, die jeweils in Molekularströmungsverbindung mit der ersten Öffnung (114) und der zweiten Öffnung (116) der Leitung (108) steht, und wobei die Einrichtung weiter eine dritte Pumpeinheit in Molekularströmungsverbindung mit der vierten Öffnung, eine vierte Pumpeinheit in Molekularströmungsverbindung mit der fünften Öffnung, und eine fünfte Pumpeinheit in Molekularströmungsverbindung mit der sechsten Öffnung aufweist, und wobei die dritte, die vierte und die fünfte Pumpeinheit alle mit dem ersten und dem zweiten elektrischen Anschluss (1340, 1342) verbunden ist.

8. Einrichtung nach einem der Ansprüche 3 bis 7, wobei der erste Flansch (110, 1322) und der dritte Flansch (1320) durch Befestigungselemente (1314, 1316) außerhalb der Dichtungsscheibe miteinander verbunden sind.

9. Einrichtung nach Anspruch 8, wobei die Befestigungselemente (1314, 1316) derart lösbar sind, dass, wenn die Befestigungselemente gelöst sind, die Dichtungsscheibe frei zwischen dem ersten Flansch und dem dritten Flansch herausgenommen werden kann.

10. Einrichtung nach irgendeinem vorhergehenden Anspruch, wobei ein linearer Pfad von der Pumpeinheit zur dritten Öffnung vorhanden ist.

## Revendications

1. Appareil pour fournir un gradient de pression entre une première ouverture et une deuxième ouverture, ledit appareil comprenant :
un conduit (108, 1388) comprenant une première extrémité (610) ayant une première bride (110, 1322) autour d'une première ouverture (114), une deuxième extrémité (612) ayant une deuxième bride (112, 1324) autour d'une deuxième ouverture (116), et un corps (618) entre la première extrémité (610) et la deuxième extrémité (612) ayant une troisième ouverture (600, 602, 604, 606) en communication d'écoulement moléculaire avec la première ouverture (114) et la deuxième ouverture (116), où la première ouverture (114) a une première aire de section transversale et la deuxième ouverture (116) a une deuxième aire de section transversale ;
une unité de pompage en communication d'écoulement moléculaire avec la troisième ouverture (600, 602, 604, 606) ; et **caractérisé en ce que** l'appareil comprend un premier étranglement pour commander le gradient de pression, ledit premier étranglement étant constitué de
un premier disque d'étanchéité (106) ayant :
une première surface (126) fournissant un contact étanche avec la première bride (110) ;
une deuxième surface (128) faisant face à la première surface (126) ; et
une ouverture (124) s'étendant entre la première surface (126) et la deuxième surface (128) et ayant une aire de section transversale qui est inférieure à la première aire de section transversale ; dans lequel
l'ouverture du disque (124) est alignée avec la première et la deuxième ouverture.

2. Appareil selon la revendication 1, ledit appareil comprenant en outre :
un deuxième étranglement constitué d'un deuxième disque d'étanchéité (104) ayant :
une première surface (120) fournissant un contact étanche avec la deuxième bride (112) ;
une deuxième surface (122) faisant face à la première surface (120) du deuxième disque d'étanchéité (104) ; et
une ouverture (118) s'étendant entre la première surface (120) du deuxième disque d'étanchéité (104) et la deuxième surface (122) du deuxième disque d'étanchéité (104) et ayant une aire de section transversale qui est inférieure à la deuxième aire de section transversale.

3. Appareil selon la revendication 1 ou 2, comprenant en outre un deuxième conduit (1398) comprenant une troisième bride (1320) en contact étanche avec la deuxième surface du premier disque d'étanchéité (106).

4. Appareil selon la revendication 3 dans lequel le deuxième conduit (1398) comprend en outre une première extrémité où la troisième bride (1320) est autour d'une première ouverture (1616) dans le deuxième conduit (1398), une deuxième extrémité ayant une quatrième bride (1326) autour d'une deuxième ouverture (1608) dans le deuxième conduit, et un corps entre la première extrémité et la deuxième extrémité du deuxième conduit et ayant une troisième ouverture en communication d'écoulement moléculaire avec la première ouverture et la deuxième ouverture du deuxième conduit.

5. Appareil selon la revendication 4 comprenant en outre une deuxième unité de pompage en communication d'écoulement moléculaire avec la troisième ouverture dans le deuxième conduit (1398).

6. Appareil selon la revendication 5 comprenant en outre :
des premier et deuxième ports électriques (1340, 1342) connectés à l'unité de pompage ;
des troisième et quatrième ports électriques (1344, 1346) connectés à la deuxième unité de pompage ; et
un conducteur externe (2104) connecté entre le deuxième port électrique et le troisième port électrique.

7. Appareil selon la revendication 6 dans lequel le corps du conduit comprend en outre des quatrième, cinquième et sixième ouvertures (600, 602, 604, 606), chacune en communication d'écoulement moléculaire avec la première ouverture (114) et la deuxième ouverture (116) du conduit (108) et dans lequel l'appareil comprend en outre une troisième unité de pompage en communication d'écoulement moléculaire avec la quatrième ouverture, une quatrième unité de pompage en communication d'écoulement moléculaire avec la cinquième ouverture, et une cinquième unité de pompage en communication d'écoulement moléculaire avec la sixième ouverture et dans lequel les troisième, quatrième et cinquième unités de pompage sont toutes connectées aux premier et deuxième ports électriques (1340, 1342).

8. Appareil selon l'une quelconque des revendications 3 à 7, dans lequel la première bride (110, 1322) et la troisième bride (1320) sont connectées l'une à l'autre par des éléments de fixation (1314, 1316) extérieurs au disque d'étanchéité.

9. Appareil selon la revendication 8 dans lequel les éléments de fixation (1314, 1316) sont libérables de telle sorte que lorsque les éléments de fixation sont libérés, le disque d'étanchéité est libre d'être retiré d'entre la deuxième bride et la troisième bride.

10. Appareil selon une quelconque revendication précédente, dans lequel il existe un chemin linéaire allant de l'unité de pompage à la troisième ouverture.
